# EUROPEAN PATENT SPECIFICATION

(11) **EP 3 811 087 B1**
(45) Date of publication and mention of the grant of the patent: **21.10.2026**
(21) Application number: 19806377.8
(22) Date of filing: 24.05.2019
(51) Int. Cl.: G01Q 60/24, G01Q 60/40, G01Q 60/42

(54) **SCANNING PROBE MICROSCOPE USING SENSOR MOLECULES TO IMPROVE PHOTO-INDUCED FORCE ON SAMPLES**
RASTERSONDENMIKROSKOP MIT VERWENDUNG VON SENSORMOLEKÜLEN ZUR VERBESSERUNG VON LICHTINDUZIERTER KRAFT AUF PROBEN
MICROSCOPE À SONDE DE BALAYAGE UTILISANT DES MOLÉCULES DE CAPTEUR POUR AMÉLIORER LA FORCE PHOTO-INDUITE SUR DES ÉCHANTILLONS

(30) Priority: 25.05.2018 US 201862676878 P
(43) Date of publication of application: 28.04.2021
(73) Proprietor: Molecular Vista Inc., San Jose, CA 95119 (US)
(72) Inventor: ALBRECHT, Thomas R., San Jose, CA 95125 (US); NOWAK, Derek, CA 95037 (US); JAHNG, Junghoon, San Jose, CA 95119 (US); PARK, Sung I., Saratoga, CA 95070 (US); LEE, Eun Seong, San Jose, CA 95119 (US)
(74) Representative: EIP
(86) International application number: PCT/US2019/034058
(87) International publication number: WO 2019/227078

(56) References cited:
- EP-A1- 1 623 953
- WO-A1-2018/089022
- US-A- 5 353 632
- US-A- 5 353 632
- US-A1- 2009 249 521
- US-A1- 2010 218 286
- US-A1- 2013 283 487
- US-A1- 2015 308 947
- US-A1- 2015 308 947
- US-A1- 2018 052 186
- US-A1- 2018 120 344

## Description

### BACKGROUND OF THE INVENTION

Photo-induced force microscopy (PiFM) utilizes a metal coated atomic force microscopy (AFM) probe tip to detect the photo-induced forces and/or force gradients acting between the AFM probe tip and a sample to measure the sample's local optical polarizability below the tip apex. An important element that determines the strength of signal is the field enhancement that results from the metal coating, shape of the probe tip, and the P polarization (electric field of the light that is mostly parallel to the tip axis) of the excitation light. The enhanced field is most intense right at the apex and quickly decays (in a matter of ~ 10s of nm) with increasing distance from the apex. The metal typically has a flat response to the infrared (IR) excitation source as a function of wavelength whereas the sample may have one or more pronounced responses corresponding to vibrational resonances associated with the sample's chemical makeup; somewhat less frequently, the probe tip and sample may also have more exotic resonances such as plasmon resonances. PiFM will record strong signals at those wavelengths associated with resonances. Since the wavelengths of the vibrational resonances are associated with specific molecular composition, PiFM spectra can point to local chemical composition of the sample with nm-scale spatial resolution.

Other types of nanoscale instruments that rely on the vibrational and plasmonic resonances to study the sample's chemical make-up include photo-thermal induced resonance (PTIR) where the absorption of the excitation light induces thermal expansion of the sample, which causes the change in AFM cantilever's deflection signal and scattering scanning near-field optical microscope (s-SNOM, also known as aperture less near-field optical microscope) where the scattered near-field photons from the probe tip is collected by a far-field photodetector. In all these techniques (PiFM, PTIR, and s-SNOM), the resonances in the sample are detected. Therefore, all these techniques become mostly useless with samples that are not IR active, i.e., infrared excitation does not excite the vibrational resonance. There are many important samples that are not IR active or their vibrational resonance is not accessible via the infrared laser source in use. In particular, quantum cascade laser, which produces continuously tunable IR light with good amount of power typically ranges from about 5 microns to 13 microns. Some specific examples that are not IR active in this spectral range are many 2-dimensional materials, silicon, various metals, and dielectrics such as silicon-germanium (SiGe). Many of these materials are used actively for diverse applications, and it would be good to be able to highlight them with nanoscale spatial resolution.

EP 1 623 953 A1 describes a probe comprising support of a gold wire and, fixed thereon, an intermediate excited medium having been excited to an excited triplet state by supply of external energy thereto. The transfer of excited triplet energy is effected from the intermediate excited medium toward a first molecule having a residue with bonding capability. The first molecule having thus been excited by the transfer of excited triplet energy is bonded with a second molecule having a residue with bonding capability as a bonding target to be bonded with the first molecule.

US 2015/308947 A1 describes a procedure and an apparatus to obtain the absorption profiles of molecular resonance with ANSOM. The apparatus includes a phase stabilization mechanism in addition to the ANSOM to maintain high phase precision homodyne phase condition of less than 0.1 rad. This method enables ANSOM performing vibrational spectroscopy at nanoscale spatial resolution.

US 5 353 632 A describes a probe for an atomic force microscope comprising a means for tunneling current. The probe has a metal tip which is covered with a monomolecular film. The body of the probe is covered with a monomolecular laminated film, wherein conductive molecules are fixed on the monomolecular film and/or the said monomolecular laminated film. The monomolecular laminated film has a crosslinked electroconductive surface.

US 2013/283487 A1 describes a method which extends the domain of AFM's to nanoscale spectroscopy. Molecular resonance of nanometer features can be detected and imaged purely by mechanical detection of the force gradient between the interaction of the optically driven molecular dipole/multipole and its mirror image in a Platinum coated scanning probe tip. The method is extendable to obtain nanoscale spectroscopic information ranging from infrared to UV and RF.

WO 2018/089022 A1 describes probes with geometric confined curved tip shapes developed as part of cantilevered probes for scanning apertureless near-field microscopy. The probe operates as a sensitive AFM probe with combined capabilities for enhancement of various modalities. The probes are configured to be optimized for their combined optical properties and their material properties to permit both enhanced fields and quantum state formation with the close approach of the tip to the sample. The local enhancement increases the lateral (X, Y) and axial (Z) resolution of these optical processes without the need for an apertured probe for near-field effects thus providing apertureless near-field optical imaging of various modalities.

### SUMMARY OF THE INVENTION

A scanning probe microscope and method of operating the microscope uses a resonant material between a metallic probe tip and a surface of a sample with at least one material having a dielectric constant ε. When electromagnetic radiation from a light source is transmitted to an interface between the metallic probe tip and the sample, absorption of the electromagnetic radiation by the resonant sensor material that is dependent on the dielectric constant of the at least one material of the sample is detected.

A scanning probe microscope in accordance with claim 1 of the invention includes a cantilever with a metallic probe tip to interface a sample with at least one material having a dielectric constant ε, a light source to transmit electromagnetic radiation to an interface between the metallic probe tip and the sample, a vibration drive device coupled to the cantilever that vibrates the cantilever, a resonant sensor material between the metallic probe tip and a surface of the sample, and a detection system to detect absorption of the electromagnetic radiation by the resonant sensor material, wherein the absorption of the electromagnetic radiation by the resonant sensor material is dependent on the dielectric constant ε of the at least one material of the sample.

A method of operating a scanning probe microscope in accordance with claim 13 of the invention includes driving a cantilever with a metallic probe tip of the scanning probe microscope to vibrate so that the metallic probe tip interfaces a sample with at least one material having a dielectric constant ε, modulating a light source that irradiates an interface between the probe tip and the sample with electromagnetic radiation, wherein a resonant sensor material is located between the metallic probe tip and a surface of the sample, and detecting absorption of the electromagnetic radiation by the resonant sensor material, wherein the absorption of the electromagnetic radiation by the resonant sensor material is dependent on the dielectric constant ε of the at least one material of the sample.

Other aspects and advantages of the present invention will become apparent from the following detailed description, taken in conjunction with the accompanying drawings, illustrated by way of example of the principles of the invention.

### BRIEF DESCRIPTION OF THE DRAWINGS

Fig. 1 is a block diagram of a scanning probe microscope in accordance with an embodiment of the invention.
Fig. 2A illustrates a cross-sectional view of a sample where SiGe line is repeated in the matrix of SiO₂.
Fig. 2B illustrates AFM topography that shows the SiGe lines in the sample shown in Fig. 2A.
Fig. 2C illustrates PiFM of the sample shown in Fig. 2A that has been measured with a metal coated probe tip.
Fig. 2D illustrates PiFM spectra taken across the SiGe lines of the sample shown in Fig. 2A.
Fig. 2E illustrates PiFM of the sample shown in Fig. 2A that has been measured using a metal probe tip with a thin coating of sensor molecule material, which shows Si-O vibrations around 1100 cm⁻¹ when the tip is on top of the SiGe line of the sample shown in Fig. 2A in accordance with an embodiment of the invention.
Fig. 2F illustrates PiFM spectra taken using a metal probe tip with a thin coating of sensor molecule material, which shows a sizable PiF signal at 1266 cm⁻¹ when the tip is on top of the SiGe line of the sample shown in Fig. 2A in accordance with an embodiment of the invention.
Fig. 2G illustrates PiFM of the sample shown in Fig. 2A that has been measured using a metal probe tip with a thin coating of sensor molecule material, which shows that PiFM image at 1270 cm⁻¹ in fact highlights the SiGe lines clearly even though SiGe does not have IR active vibrational mode at 1270 cm⁻¹ in accordance with an embodiment of the invention.
Fig. 3 shows schematically the different electric fields when the probe tip is on top of materials with different dielectric constants.
Fig. 4 shows the sensor material's IR spectrum and what PiFM spectra would report when the probe tip is on top of materials with varying dielectric constant in accordance with an embodiment of the invention.
Fig. 5A shows an image of silver nanowires buried within a polymer produced via topography in accordance with an embodiment of the invention.
Fig. 5B shows an image of silver nanowires buried within a polymer produced via PiFM in accordance with an embodiment of the invention.
Fig. 6 is a process flow diagram of a method of operating a scanning probe microscope in accordance with an embodiment of the invention.

### DETAILED DESCRIPTION

As mentioned above, one of the parameters that govern the strength of the photo-induced force microscopy (PiFM) signal is the local field enhancement underneath the apex of the metal atomic force microscopy (AFM) probe tip. The magnitude of the field strength will depend on how well the metal probe tip couples to the sample/substrate structure electromagnetically. For example, it is well-known for all near-field imaging tools (PTIR, s-SNOM, and PiFM), the response of a thin sample is enhanced if the sample is deposited onto a metal substrate; that is because the metal's extremely high dielectric constant will force the gap field (between the probe tip and the sample surface) to increase, and the effective field the sample sees will be much higher than for a nonmetallic substrate. The extent of the gap field enhancement is dependent on the dielectric constant of the substrate; the higher the dielectric constant, the greater the field enhancement. Therefore, if there is a thin uniform material A with a unique vibrational resonance at f1 on top of two materials (B and C) with different dielectric constants (ε_{B} > ε_{C}), then the PiFM signal at f1 will be stronger when it is on B. This result will be the same even if the two materials B and C were not IR active. Therefore, the materials B and C can be distinguished by covering them with a uniform film that has a vibrational resonance accessible by the laser source. While materials of different dielectric constants can be distinguished, the chemical identification will not be as clear as if the full PiFM spectrum was acquired. Even so, the ability to highlight different materials based on different dielectric constants when they do not render much information under normal IR interrogation is a useful capability. The material A can be considered as a sensor molecule material since it can be used to infer information of the actual sample consisting of materials B and C. Note that rather than coating the sample surface with a uniform layer of sensor molecules, the probe tip can instead be coated with the sensor molecule and leave the sample surface with B and C exposed. When the sample is imaged with such a tip coated with the sensor molecule material A, the effect will be the same, i.e., the PiFM signal will show a stronger response at f1 when the tip is over the material B due to its higher dielectric constant.

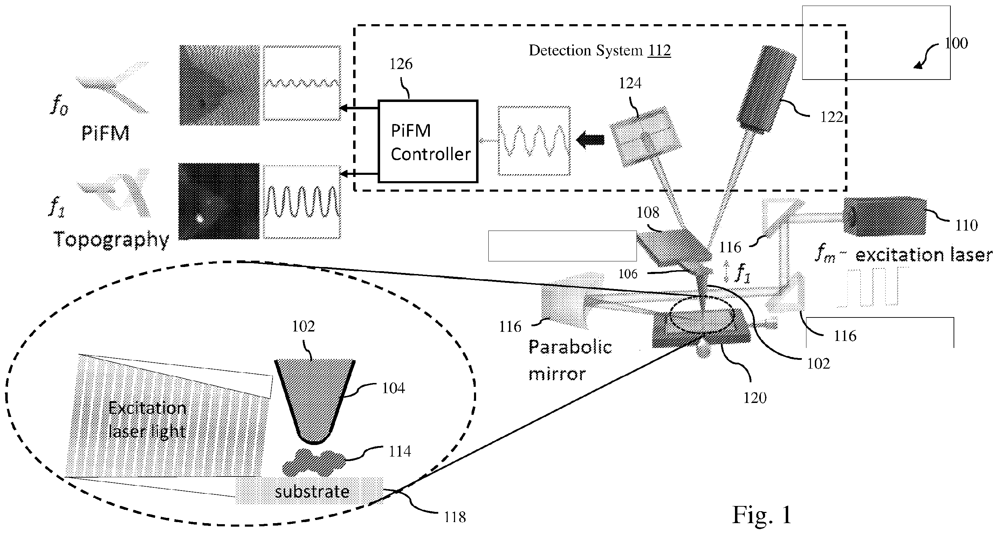

Fig. 1 shows an embodiment of a scanning probe microscope 100 where a metallic AFM probe tip 102 is coated with a layer of sensor material 104. The scanning probe microscope 100 works as a photo-induced force microscope (PiFM), where one mechanical resonance of a cantilever 106 is used to track topography and another mechanical resonance is used to measure the photo-induced force or force gradient. The cantilever 106 is driven by a vibration drive device 108, e.g., a piezoelectric transducer, to vibrate the cantilever with the metallic probe tip 102 at frequency fj, and an excitation light source 110, e.g., a tunable laser 110 is modulated or pulsed at frequency fm, where fm = fi + fj or fm = fj-fi and where fi and fj are i-th and j-th mechanical resonances of the cantilever 106. Fig. 1 depicts one combination where fj=j1 and fi=fo.

Nonlinear interaction between the dither motion and the photo-induced force results in frequency mixing that generates cantilever vibration at fi. The choice of frequencies fi and fj can be made based on the bandwidth of a detection system 112, but one-method utilizes fi is the first flexural mode and fj is the second flexural mode of the cantilever; in this setup, the Van der Waals interaction is measured for topography measurement at the second flexural mode, and the side band resulting from the mixing of the photo-induced force on the Van der Waals interaction is measured on the first resonance mode of the cantilever.

As shown in Fig. 1, the electromagnetic radiation from the tunable laser 110 is directed to an interface between the metallic probe tip 102 and a sample 114, which includes at least one material having a dielectric constant ε and at least one other material having a different dielectric constant, using one or more optical elements 116, which may include a parabolic mirror to focus the electromagnetic radiation to the interface. The metallic probe tip 102 may be a solid metal tip or a metal-coated tip. The sample 114 is placed on a substrate 118 of an XYZ sample scanner, which can move the sample in X, Y and Z directions.

The detection system 112 includes an AFM feedback light source 122, e.g., a laser, a photo-detector 124 and a PiFM controller 126, which are all well-known components. The AFM feedback light source 122 and the photo-detector 124 operates to optically detect vibrations of the cantilever 106 due to photo-induced forces and/or force gradients acting between the probe tip 102 and the sample 114 and due to the Van der Waals interaction. The PiFM controller 126 includes electronics to process the signals generated by the photo-detector 124 in response to received light from the AFM feedback light source reflected off the cantilever 106. The PiFM controller 126 can detect the absorption of the electromagnetic radiation from the light source 110 by the resonant sensor material 104, which is dependent on the dielectric constants of the materials in the sample. In an embodiment, the PiFM controller 126 detects the absorption of the electromagnetic radiation by the resonant sensor material 104 by measuring photo-induced forces or force gradients acting on the probe tip 102 when interfaced with the sample 104. In an embodiment, the PiFM controller 126 may also detect the absorption of the electromagnetic radiation by the resonant sensor material 104 by detecting the electromagnetic radiation scattered by the combination of the probe tip, the resonant sensor material, and the sample at the interface of the probe tip and the sample. The details of the scanning probe microscope 100 are described in the U.S. Patent No. 8,739,311 B2, which is incorporated by reference herein.

PiFM can be used to measure the photo-induced force arising from the absorption of the excitation light by the sample when the excitation wavelength can excite the vibrational or other resonances in the sample. However, if the excitation wavelength cannot excite a particular vibrational resonance in the sample due to either the lack of a source with the right wavelength or due to the fact that the vibration mode is not "IR active," PiFM will not be able to detect any signal at the wavelength. For example, if the sample consists of SiO₂ and SiGe, the standard PiFM will be able to identify the SiO₂ parts by using the absorption at ~1100 cm⁻¹ whereas the SiGe will not be detectable since it has no vibrational mode that is IR active in the range of the typical laser sources used with PiFM.

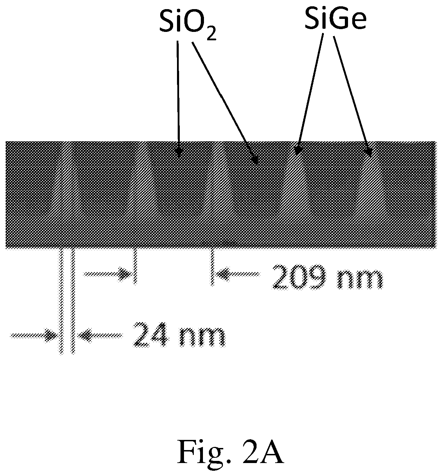

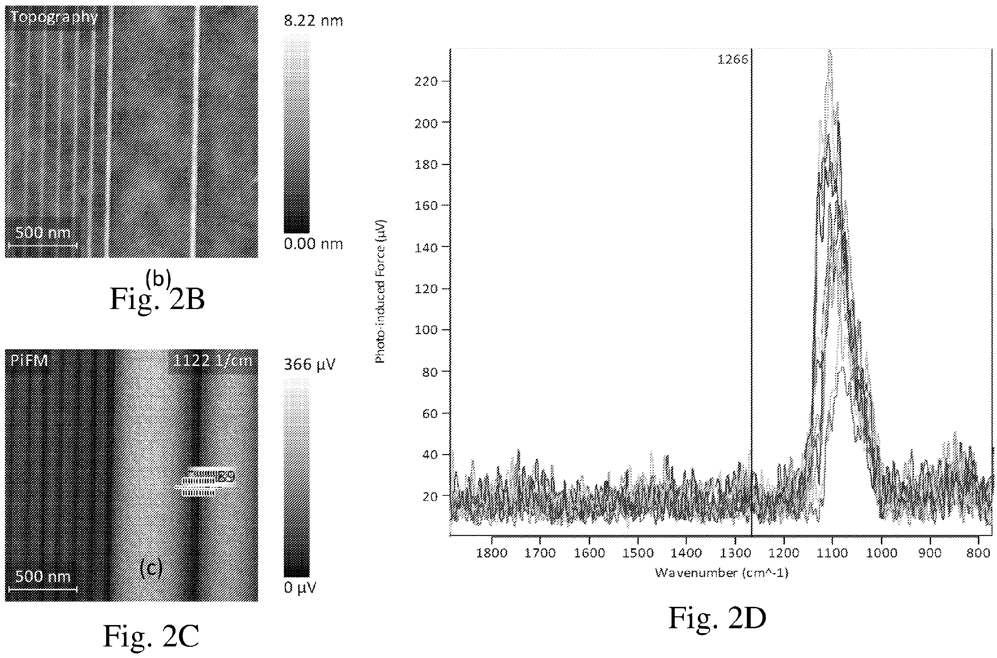

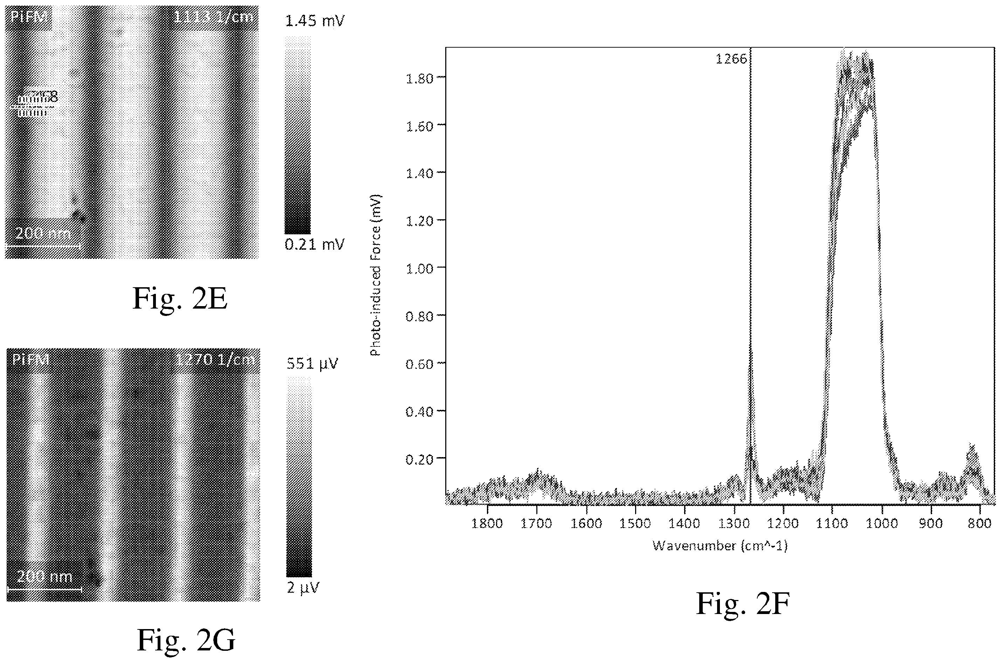

Fig. 2A shows a cross-sectional view of a sample where SiGe line is repeated in the matrix of SiO₂. As shown in Fig. 2A, adjacent SiGe lines are spaced 209 nm apart and the width of each SiGe line being 24 nm. Since the SiGe lines are slightly taller than the SiO₂ matrix, AFM topography clearly shows the SiGe lines, as illustrated in Fig. 2B. When such a sample is measured with a metal coated probe tip in PiFM, the SiO₂ matrix cab be very clearly seen at 1120 cm⁻¹ with SiGe lines appearing as dark lines, as illustrated in Fig. 2C. Unfortunately, there is no wavelength available in a quantum cascade laser (QCL) to detect the SiGe lines. As such, when PiFM spectra is taken across the SiGe lines, as illustrated in Fig. 2D, it can be seen that there is PiF signal only around 1100 cm-1 from the Si-O vibrations. However, when a metal probe tip with a thin coating of sensor molecule material is used, which has a IR active vibrational peak at 1266 cm⁻¹, PiFM spectra show a sizable PiF signal at 1266 cm⁻¹ in addition to the Si-O vibrations around 1100 cm⁻¹ when the tip is on top of the SiGe line, as illustrated in Fig. 2E and 2F. With such a probe tip, PiFM image at 1270 cm⁻¹ in fact highlights the SiGe lines clearly even though SiGe does not have IR active vibrational mode at 1270 cm^{- 1}, as illustrated in Fig. 2G. It is because of this ability of the coating to map materials that would otherwise be invisible to IR excitation that this additional coating is called a sensor molecule material.

These results arise from the different field enhancement at the probe tip depending on the dielectric constant of the sample. The higher the dielectric constant, the greater the field enhancement that the sensor molecule material is seeing. The net result is that when the probe tip is on top of a material with higher dielectric constant, the intensity of the excitation light is effectively higher than when the probe tip is on top of a material with lower dielectric constant.

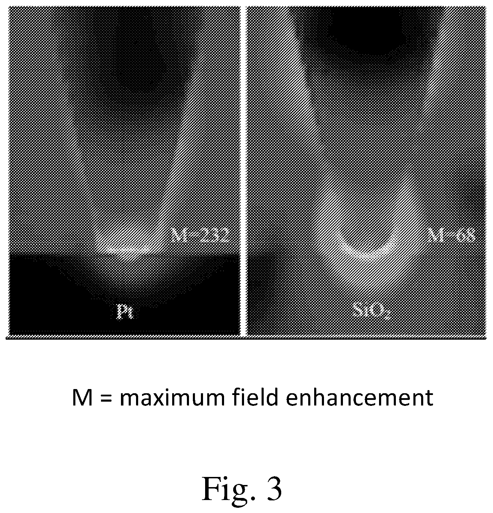

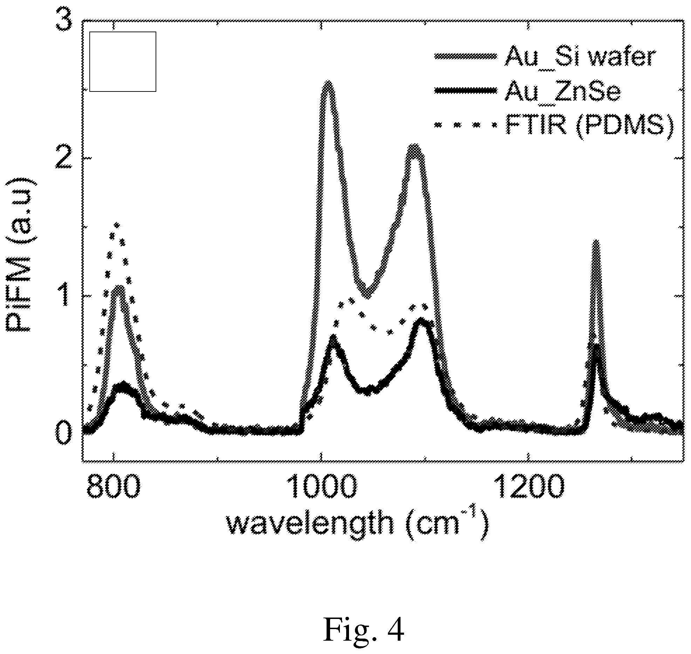

Fig. 3 shows schematically the different electric fields when the probe tip is on top of materials with different dielectric constants. When the probe tip is on top of platinum (Pt), the maximum field enhancement is M=232. However, when the probe tip is on top of SiO₂, the maximum field enhancement is M=68. Therefore, the sensor molecule material's response at its own IR active vibrational modes will respond with more intensely when it is over the material with higher dielectric constant. This allows PiFM to be able to generate material dependent contrast even when the sample contains components that are not IR active. Fig. 4 shows the sensor material's IR spectrum and what PiFM spectra would report when the probe tip is on top of materials with varying dielectric constant.

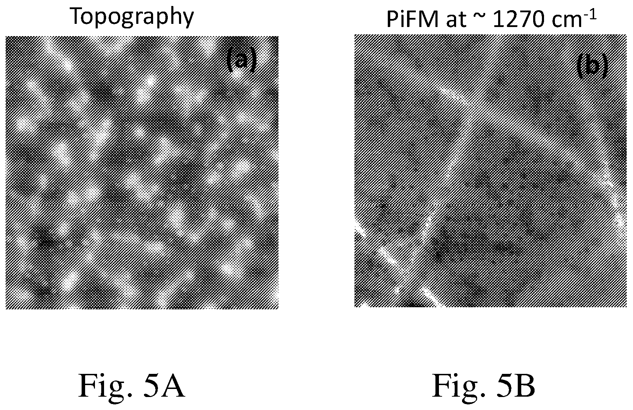

Since light can penetrate non-metallic materials significantly, it turns out that a presence of metal buried within non-metal can affect the field enhancement as well. Therefore, one should be able to image buried structures as well by using a sensor molecule's vibrational modes. Figs. 5A and 5B show just such an image where silver nanowires buried within a polymer is effectively imaged at one of sensor material's vibrational mode. Fig. 5A shows an image produced via topography. Fig. 5B shows an image produced via PiFM.

AFM probe tips with sensor material can be prepared in a variety of methods. One approach is to place the probe tip in an environment where the sensor material is present as a vapor, and to rely on condensation from vapor to coat the probe tip. A practical example of this is to place the probe tip in a small enclosure containing the polymeric elastomer material PDMS (polydimethylsiloxane). Typically, after some days of exposure to this environment, a nanoscopic layer of siloxane-containing material forms on the probe tip and can function as a sensor material. A variation on this technique is to place the probe tip in an evaporator (a vacuum enclosure in which a vial of sensor material is heated to evaporate it); the evaporated material travels through the vacuum and deposits on the probe tip. Another approach is to create a self-assembled monolayer of material on a tip by placing the probe tip in a liquid containing appropriate species needed for the self-assembly of a monolayer of a target sensor material. Methods of producing self-assembled organic layers are widely reported in scientific literature. Another approach to creating a thin layer of sensor material is dip coating, in which the probe tip is dipped into a solution containing a specific concentration of sensor material in a solvent. Upon removing the tip from the solution, the solvent evaporates, leaving behind a coating of sensor material.

In an embodiment, the sensor material 104 used on the metallic probe tip 102 has an absorption resonance within the wavelength range of the tunable laser 110. The absorption resonance of the sensor material 104 may be within the infrared or visible light range of wavelengths. In an embodiment, the sensor material 104 may be a thin film of material, which may be self-assembled monolayer of material, adhering to at least the apex of the metallic probe tip 102. In some embodiments, the sensor material 104 may be a particle of a cluster of molecules not thicker than 50 nm in the direction parallel to the axis of the tip. As used herein, "particle" simply means a small amount of material, anything from a single molecule up to a particle that can be seen by the naked eye (fraction of a mm). Also, as used herein, "direction parallel to the axis of the tip" refers generally to the vertical direction along the length of the probe tip, i.e., normal to the surface of the XYZ sample scanner 120 facing the probe tip. Also, as used herein, "near the apex of the tip" means that it is within the range of generating a PiFM force between the tip and a sample, which would generally be up to several tens of nm and as much as one hundred nm. As noted above, the sensor material 104 used on the metallic probe tip 102 may be a siloxane-containing material having at least one absorption resonance that can be produced by the electromagnetic radiation generate by the tunable laser 110.

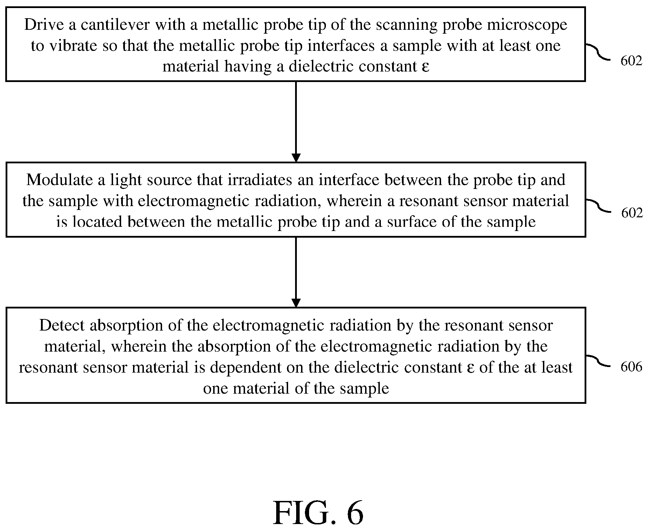

A method of operating a scanning probe microscope, such as the scanning probe microscope 100, in accordance with an embodiment of the invention is described with reference to a flow diagram of Fig. 6. At block 602, a cantilever with a metallic probe tip of the scanning probe microscope is driven to vibrate so that the metallic probe tip interfaces a sample with at least one material having a dielectric constant ε. At block 604, a light source that irradiates an interface between the probe tip and the sample with electromagnetic radiation is modulated, where a resonant sensor material is located between the metallic probe tip and a surface of the sample. At block 606, absorption of the electromagnetic radiation by the resonant sensor material, wherein the absorption of the electromagnetic radiation by the resonant sensor material is dependent on the dielectric constant ε of the at least one material of the sample.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto.

## Claims

1. A scanning probe microscope (100) comprising:
a cantilever (106) with a metallic probe tip (102) for interfacing a sample (114) with a plurality of materials having respective dielectric constants;
a light source (110) to transmit electromagnetic radiation to an interface between the metallic probe tip and the sample;
a vibration drive device (108) coupled to the cantilever that vibrates the cantilever;
a resonant sensor material (104) between the metallic probe tip and a surface of the sample; and
a detection system (112) to detect absorption of the electromagnetic radiation by the resonant sensor material, wherein the absorption of the electromagnetic radiation by the resonant sensor material is dependent on the dielectric constants of the materials of the sample, wherein the resonant sensor material has a vibrational resonance at a frequency f₁, and wherein the absorption of the electromagnetic radiation at the frequency f₁, by the resonant sensor material, is higher when the metallic probe tip is positioned over a first material of the sample having a higher dielectric constant compared to when the metallic probe tip is positioned over a second material of the sample having a lower dielectric constant.

2. The scanning probe microscope of claim 1, wherein the detection system detects the absorption of the electromagnetic radiation by the resonant sensor material by measuring photo-induced forces or force gradients acting on the probe tip when interfaced with the sample.

3. The scanning probe microscope of claim 1, wherein the detection system detects the absorption of the electromagnetic radiation by the resonant sensor material by detecting the electromagnetic radiation scattered by the combination of the probe tip, the resonant sensor material, and the sample at the interface of the probe tip and the sample.

4. The scanning probe microscope of claim 1, wherein the light source includes a tunable laser (110), and the resonant sensor material has an absorption resonance within the wavelength range of the tunable laser.

5. The scanning probe microscope of claim 1, wherein the resonant sensor material is attached to the probe tip.

6. The scanning probe microscope of claim 5, wherein the light source includes a tunable laser (110), and the resonant sensor material has an absorption resonance within the wavelength range of the tunable laser.

7. The scanning probe microscope of claim 5, wherein the resonant sensor material includes a thin film of material adhering to at least the apex of the probe tip.

8. The scanning probe microscope of claim 5, wherein the resonant sensor material includes self-assembled monolayer of material adhering to at least the apex of the probe tip.

9. The scanning probe microscope of claim 5, wherein the resonant sensor material is not thicker than 50 nm in the direction parallel to the axis of the probe tip along the length of the probe tip.

10. The scanning probe microscope of claim 5, wherein the resonant sensor material includes a siloxane-containing material, and the electromagnetic radiation from the light source can produce at least one absorption resonance of the siloxane-containing material.

11. The scanning probe microscope of claim 1, wherein the resonant sensor material is attached to the sample.

12. The scanning probe microscope of claim 1, wherein an absorption resonance of the resonant sensor material is within the infrared or visible light range of wavelengths.

13. A method of operating a scanning probe microscope (100) comprising:
driving (602) a cantilever (106) with a metallic probe tip (102) of the scanning probe microscope to vibrate so that the metallic probe tip interfaces a sample (114) with a plurality of materials having respective dielectric constants;
modulating (604) a light source (110) that irradiates an interface between the probe tip and the sample with electromagnetic radiation, wherein a resonant sensor material (104) is located between the metallic probe tip and a surface of the sample; and
detecting (606) absorption of the electromagnetic radiation by the resonant sensor material, wherein the absorption of the electromagnetic radiation by the resonant sensor material is dependent on the dielectric constants of the materials of the sample, wherein the resonant sensor material has a vibrational resonance at a frequency f₁, and wherein the absorption of the electromagnetic radiation at the frequency f₁, by the resonant sensor material, is higher when the metallic probe tip is positioned over a first material of the sample having a higher dielectric constant compared to when the metallic probe tip is positioned over a second material of the sample having a lower dielectric constant.

14. The method of 13, wherein detecting the absorption of the electromagnetic radiation includes measuring photo-induced forces or force gradients acting on the probe tip when interfaced with the sample.

15. The method of claim 13, further comprising coating the sample with the resonant sensor material.

## Patentansprüche

1. Rastersondenmikroskop (100), umfassend:
einen Ausleger (106) mit einer metallischen Sondenspitze (102) zum Kontaktieren einer Probe (114) mit einer Vielzahl von Materialien, die jeweilige Dielektrizitätskonstanten aufweisen;
eine Lichtquelle (110) zum Übertragen elektromagnetischer Strahlung an eine Kontaktfläche zwischen der metallischen Sondenspitze und der Probe;
eine Vibrationsantriebsvorrichtung (108), die an den Ausleger gekoppelt ist, die den Ausleger in Schwingung versetzt;
ein resonantes Sensormaterial (104) zwischen der metallischen Sondenspitze und einer Oberfläche der Probe; und
ein Detektionssystem (112), um eine Absorption der elektromagnetischen Strahlung durch das resonante Sensormaterial zu detektieren, wobei die Absorption der elektromagnetischen Strahlung durch das resonante Sensormaterial von den Dielektrizitätskonstanten der Materialien der Probe abhängig ist, wobei das resonante Sensormaterial eine Schwingungsresonanz bei einer Frequenz f₁ aufweist, und wobei die Absorption der elektromagnetischen Strahlung bei der Frequenz f₁ durch das resonante Sensormaterial höher ist, wenn die metallische Sondenspitze über einem ersten Material der Probe, das eine höhere Dielektrizitätskonstante aufweist, positioniert ist, verglichen damit, wenn die metallische Sondenspitze über einem zweiten Material der Probe, das eine niedrigere Dielektrizitätskonstante aufweist, positioniert ist.

2. Rastersondenmikroskop nach Anspruch 1, wobei das Detektionssystem die Absorption der elektromagnetischen Strahlung durch das resonante sensorMaterial durch Messen photoinduzierter Kräfte oder Kraftgradienten detektiert, die auf die Sondenspitze wirken, wenn diese mit der Probe in Kontakt ist.

3. Rastersondenmikroskop nach Anspruch 1, wobei das Detektionssystem die Absorption der elektromagnetischen Strahlung durch das resonante Sensormaterial detektiert, durch Detektieren der elektromagnetischen Strahlung, die durch die Kombination der Sondenspitze, des resonanten Sensormaterials und der Probe an der Kontaktfläche der Sondenspitze und der Probe gestreut wird.

4. Rastersondenmikroskop nach Anspruch 1, wobei die Lichtquelle einen abstimmbaren Laser (110) einschließt und das resonante Sensormaterial eine Absorptionsresonanz innerhalb des Wellenlängenbereichs des abstimmbaren Lasers aufweist.

5. Rastersondenmikroskop nach Anspruch 1, wobei das resonante Sensormaterial an der Sondenspitze angebracht ist.

6. Rastersondenmikroskop nach Anspruch 5, wobei die Lichtquelle einen abstimmbaren Laser (110) einschließt und das resonante Sensormaterial eine Absorptionsresonanz innerhalb des Wellenlängenbereichs des abstimmbaren Lasers aufweist.

7. Rastersondenmikroskop nach Anspruch 5, wobei das resonante Sensormaterial einen dünnen Materialfilm einschließt, der an mindestens dem Scheitelpunkt der Sondenspitze haftet.

8. Rastersondenmikroskop nach Anspruch 5, wobei das resonante Sensormaterial eine selbstorganisierende Monoschicht aus Material einschließt, die an mindestens dem Scheitelpunkt der Sondenspitze haftet.

9. Rastersondenmikroskop nach Anspruch 5, wobei das resonante Sensormaterial in der Richtung parallel zu der Achse der Sondenspitze entlang der Länge der Sondenspitze nicht dicker als 50 nm ist.

10. Rastersondenmikroskop nach Anspruch 5, wobei das resonante Sensormaterial ein siloxanhaltiges Material einschließt und die elektromagnetische Strahlung von der Lichtquelle mindestens eine Absorptionsresonanz des siloxanhaltigen Materials erzeugen kann.

11. Rastersondenmikroskop nach Anspruch 1, wobei das resonante Sensormaterial an der Probe angebracht ist.

12. Rastersondenmikroskop nach Anspruch 1, wobei eine Absorptionsresonanz des resonanten Sensormaterials innerhalb des Wellenlängenbereichs des infraroten oder sichtbaren Lichts liegt.

13. Verfahren zum Betreiben eines Rastersondenmikroskops (100), umfassend:
Antreiben (602) eines Auslegers (106) mit einer metallischen Sondenspitze (102) des Rastersondenmikroskops, um zu schwingen, sodass die metallische Sondenspitze mit einer Probe (114) mit einer Vielzahl von Materialien in Kontakt ist, die jeweilige Dielektrizitätskonstanten aufweisen;
Modulieren (604) einer Lichtquelle (110), die eine Kontaktfläche zwischen der Sondenspitze und der Probe mit elektromagnetischer Strahlung bestrahlt, wobei ein resonantes Sensormaterial (104) zwischen der metallischen Sondenspitze und einer Oberfläche der Probe angeordnet ist; und
Detektieren (606) der Absorption der elektromagnetischen Strahlung durch das resonante Sensormaterial, wobei die Absorption der elektromagnetischen Strahlung durch das resonante Sensormaterial von den Dielektrizitätskonstanten der Materialien der Probe abhängig ist, wobei das resonante Sensormaterial eine Schwingungsresonanz bei einer Frequenz f₁ aufweist, und wobei die Absorption der elektromagnetischen Strahlung bei der Frequenz f₁ durch das resonante Sensormaterial höher ist, wenn die metallische Sondenspitze über einem ersten Material der Probe, das eine höhere Dielektrizitätskonstante aufweist, positioniert ist, verglichen damit, wenn die metallische Sondenspitze über einem zweiten Material der Probe, das eine niedrigere Dielektrizitätskonstante aufweist, positioniert ist.

14. Verfahren nach 13, wobei das Erfassen der Absorption der elektromagnetischen Strahlung das Messen von photoinduzierten Kräften oder Kraftgradienten einschließt, die auf die Sondenspitze wirken, wenn diese mit der Probe in Kontakt ist.

15. Verfahren nach Anspruch 13, ferner umfassend ein Beschichten der Probe mit dem resonanten Sensormaterial.

## Revendications

1. Microscope à sonde locale (100) comprenant :
un bras en porte-à-faux (106) avec une pointe de sonde métallique (102) pour l'interfaçage d'un échantillon (114) avec une pluralité de matériaux ayant des constantes diélectriques respectives ;
une source de lumière (110) pour transmettre un rayonnement électromagnétique à une interface entre la pointe de sonde métallique et l'échantillon ;
un dispositif d'entraînement en vibration (108) accouplé au levier en porte-à-faux qui fait vibrer le bras en porte-à-faux ;
un matériau capteur résonant (104) entre la pointe de sonde métallique et une surface de l'échantillon ; et
un système de détection (112) pour détecter l'absorption du rayonnement électromagnétique par le matériau capteur résonant, dans lequel l'absorption du rayonnement électromagnétique par le matériau capteur résonant dépend des constantes diélectriques des matériaux de l'échantillon, dans lequel le matériau capteur résonant a une résonance vibratoire à une fréquence f₁, et dans lequel l'absorption du rayonnement électromagnétique à la fréquence f₁, par le matériau capteur résonant, est plus élevée lorsque la pointe de sonde métallique est positionnée au-dessus d'un premier matériau de l'échantillon ayant une constante diélectrique plus élevée que lorsque la pointe de sonde métallique est positionnée au-dessus d'un second matériau de l'échantillon ayant une constante diélectrique plus faible.

2. Microscope à sonde locale selon la revendication 1, dans lequel le système de détection détecte l'absorption du rayonnement électromagnétique par le matériau capteur résonant en mesurant des forces ou gradients de force photo-induits agissant sur la pointe de sonde lorsqu'elle s'interface avec l'échantillon.

3. Microscope à sonde locale selon la revendication 1, dans lequel le système de détection détecte l'absorption du rayonnement électromagnétique par le matériau capteur résonant en détectant le rayonnement électromagnétique diffusé par la combinaison de la pointe de sonde, du matériau capteur résonant et de l'échantillon à l'interface de la pointe de sonde et de l'échantillon.

4. Microscope à sonde locale selon la revendication 1, dans lequel la source de lumière comporte un laser accordable (110), et le matériau capteur résonant a une résonance d'absorption dans la plage de longueurs d'onde du laser accordable.

5. Microscope à sonde locale selon la revendication 1, dans lequel le matériau capteur résonant est fixé à la pointe de sonde.

6. Microscope à sonde locale selon la revendication 5, dans lequel la source de lumière comporte un laser accordable (110), et le matériau capteur résonant a une résonance d'absorption dans la plage de longueurs d'onde du laser accordable.

7. Microscope à sonde locale selon la revendication 5, dans lequel le matériau capteur résonant comprend un film mince de matériau adhérant à au moins l'apex de la pointe de sonde.

8. Microscope à sonde locale selon la revendication 5, dans lequel le matériau capteur résonant comporte une monocouche auto-assemblée de matériau adhérant à au moins l'apex de la pointe de sonde.

9. Microscope à sonde locale selon la revendication 5, dans lequel le matériau capteur résonant n'est pas plus épais que 50 nm dans la direction parallèle à l'axe de la pointe de sonde sur la longueur de la pointe de sonde.

10. Microscope à sonde locale selon la revendication 5, dans lequel le matériau capteur résonant comporte un matériau contenant du siloxane, et le rayonnement électromagnétique provenant de la source de lumière peut produire au moins une résonance d'absorption du matériau contenant du siloxane.

11. Microscope à sonde locale selon la revendication 1, dans lequel le matériau capteur résonant est fixé à l'échantillon.

12. Microscope à sonde locale selon la revendication 1, dans lequel une résonance d'absorption du matériau capteur résonant se situe dans la plage de longueurs d'onde de la lumière infrarouge ou visible.

13. Procédé permettant de faire fonctionner un microscope à sonde locale (100), comprenant :
l'entraînement (602) d'un bras en porte-à-faux (106) avec une pointe de sonde métallique (102) du microscope à sonde locale pour le faire vibrer de sorte que la pointe de sonde métallique s'interface avec un échantillon (114) avec une pluralité de matériaux ayant des constantes diélectriques respectives ;
le fait de moduler (604) une source de lumière (110) qui irradie une interface entre la pointe de sonde et l'échantillon avec un rayonnement électromagnétique, dans lequel un matériau capteur résonant (104) est situé entre la pointe de sonde métallique et une surface de l'échantillon ; et
la détection (606) de l'absorption du rayonnement électromagnétique par le matériau capteur résonant, dans lequel l'absorption du rayonnement électromagnétique par le matériau capteur résonant dépend des constantes diélectriques des matériaux de l'échantillon, dans lequel le matériau capteur résonant a une résonance vibratoire à une fréquence f₁, et dans lequel l'absorption du rayonnement électromagnétique à la fréquence f₁, par le matériau capteur résonant, est plus élevée lorsque la pointe de sonde métallique est positionnée au-dessus d'un premier matériau de l'échantillon ayant une constante diélectrique plus élevée que lorsque la pointe de sonde métallique est positionnée au-dessus d'un second matériau de l'échantillon ayant une constante diélectrique plus faible.

14. Procédé selon la revendication 13, dans lequel la détection de l'absorption du rayonnement électromagnétique comporte la mesure de forces ou gradients de force photo-induits agissant sur la pointe de sonde lorsqu'elle s'interface avec l'échantillon.

15. Procédé selon la revendication 13, comprenant en outre le revêtement de l'échantillon avec le matériau capteur résonant.
